(19) Europäisches Patentamt
European Patent Office
Office européen des brevets

(11) **EP 2 684 703 B1**

(12) **EUROPEAN PATENT SPECIFICATION**

(45) Date of publication and mention
of the grant of the patent:
**22.06.2016 Bulletin 2016/25**

(51) Int Cl.:
*G02B 1/04* *(2006.01)*          *B41M 3/14* *(2006.01)*
*B42D 15/00* *(2006.01)*          *G02B 5/09* *(2006.01)*
*B42D 25/29* *(2014.01)*

(21) Application number: **12754516.8**

(22) Date of filing: **13.02.2012**

(86) International application number:
**PCT/RU2012/000100**

(87) International publication number:
**WO 2012/121622 (13.09.2012 Gazette 2012/37)**

(54) **MULTI-LAYERED POLYMERIC SECURITY ELEMENT WITH OPTICALLY VARIABLE EFFECT (VARIANTS)**

MEHRSCHICHTIGES POLYMERES SICHERHEITSELEMENT MIT OPTISCH VARIABLEM EFFEKT (VARIANTEN)

ÉLÉMENT DE PROTECTION MULTICOUCHE POLYMÈRE AYANT UN EFFET OPTIQUE ALTERNANT ET VARIANTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2011 RU 2011108930**

(43) Date of publication of application:
**15.01.2014 Bulletin 2014/03**

(73) Proprietor: **Federalnoe Gosudarstvennoe Unitarnoe Predpriyatie "Goznak" (FGUP "Goznak") St.Petersburg 197046 (RU)**

(72) Inventors:
• **TRACHUK, Arkadiy Vladimirovich**
  **St.Petersburg 199004 (RU)**
• **KURYATNIKOV, Andrey Borisovich**
  **Moscow 129128 (RU)**
• **CHEGLAKOV, Andrey Valerievich**
  **Moscow 119034 (RU)**
• **PISAREV, Alexandr Georgievich**
  **Moscow 115551 (RU)**
• **KORNILOV, Georgiy Valentinovich**
  **Moscow 117418 (RU)**
• **FEDOROVA, Elena Mikhailovna**
  **Moscow 115093 (RU)**
• **TURKINA, Elena Samuilovna**
  **Moscow 119454 (RU)**
• **GUBAREV, Anatoliy Pavlovich**
  **Moscow 105094 (RU)**
• **CHEPURNOY, Alexandr Ivanovich**
  **Moscow 123458 (RU)**
• **SMIRNOV, Andrey Valentinovich**
  **Moskovskaya oblast 141980 (RU)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
WO-A2-2007/133613     DE-A1-102009 022 612
EA-A1- 200 602 007     FR-A1- 2 943 800
RU-A- 2009 101 282     RU-C2- 2 395 400
US-A1- 2010 182 221

## Description

Field of the Invention

The invention relates to polymeric materials and safety printing, and can be used in the manufacture of banknotes, securities, passports, tax stamps, and identity documents for different purposes. Current safety printing techniques widely uses thin-film transparent and reflective elements made in the form of security threads, windows, laminating films and planar polymeric inserted or applied elements. Such polymeric elements

allow forming in them a variety of security features that are difficult to counterfeit. An interesting and popular trend is the formation of transparent, semi-transparent and reflective relief raster structures in the thin-film polymeric security elements. Such structures, in combination with printed and embossed raster images, create unique security effects that are resistant to counterfeiting.

Background Art

Conventional security features include Motion™ of Crane & Co., Inc. (WO2007/133613 A2, 22.11.2007), HALS™ of GRAPAC Japan Co. Inc. (EP 2132340 A1, 07.04.2010), MOVE™ of Gieseke & Devrient GmbH (RU2395842 C2, 27.02.2010).

All of the security features in various embodiments use technical solutions based on the alignment of transparent raster structures of spherical micro-lenses with printed or embossed rasters of microimages. Thereby dynamic effects can be created that represent movement of magnified apparent images outside of the plane of the security element or color-contrast effects when the viewing angle is changed.

Most closely relating to the present invention is a polymeric micro-optic film structure described in WO2007/133613 A2, 22.11.2007. The micro-optic film structure is a multilayer polymeric structure in which at least one layer comprises a relief microraster structure made up of spherical micro-lenses, and a second layer comprises a printed raster of microimages arranged in points of the printed raster, wherein the spatial period of the printed raster is determined by the spatial period of the relief microraster structure, so that different dynamic effects of magnified moving images of the printed raster elements are observed when viewing the security element.

Disadvantages of the prior art structure include a great thickness of the spherical micro-lenses and their location on the outer surface of the security element, which impair the quality of visual dynamic effects and, moreover, the surface of the security document will be inevitably damaged and contaminated in service.

Summary of the Invention

Objects of the present invention are to enhance the document security through a new visual dynamic effect and to improve the quality of the visual dynamic effect, as well as to extend the service life of the security document.

The objects are accomplished in subject matters defined in independent claims. Preferred embodiments are defined in respective dependent claims.

According to a first embodiment there is provided a security element with an optically variable effect, such as a multi-layered polymeric security element with an optically variable effect, configured as a structure in which at least one layer comprises a relief microraster structure and a second layer comprises a printed raster of microimages that are arranged in points of the printed raster, wherein the spatial period of the printed raster is determined by the spatial period of the relief microraster structure, characterized in that the elements of the relief microraster structure are configured as focusing mirror elements - micro-mirrors, that are disposed inside the element in points of the relief raster; the arrangement and orientation of the raster of micro-mirrors are selected so that they match the arrangement and orientation of the raster of microimages formed on the upper surface of the polymeric film so that magnified moving images of the elements of the printed raster and magnified moving images of shadows of the elements of the printed raster can be observed when viewing the security element.

Furthermore, the focusing mirror elements are micro-bumps embossed on a varnished layer or phase Fresnel zone plates, to which a thin reflective or semi-transparent reflective layer of metal is applied.

The multilayer polymeric security element further comprises a transparent protection coating over the relief microraster structure, and embossed convex spherical micro-bumps 3 of 60-100 $\mu$m in diameter that are vacuum deposition coated with thin reflective or semi-transparent reflective layers of metal. The metal layer may be of aluminum or silver.

According to a second embodiment there is provided a multi-layered polymeric security element with an optically variable effect, configured as a multi-layered polymeric structure in which at least one layer comprises a relief microraster structure and a second layer comprises a printed raster of microimages that are arranged in points of the printed raster; wherein the spatial period of the printed raster is determined by the spatial period of the relief microraster structure, characterized in that the elements of the relief microraster structure are configured as transparent phase Fresnel zone plates located in points of the relief raster so that magnified moving elements of the printed raster are observed when viewing the security element. Furthermore, it may comprise a transparent protective coating over the relief microraster structure.

## Brief Description of the Drawings

FIG. 1 shows schematically the alignment of rasters in the conventional Motion™ security element.

FIG. 2 shows schematically the alignment of rasters in the conventional MOVE™ security element.

FIG. 3 shows schematically the alignment of rasters in the present security element comprising focusing mirror elements.

FIG. 4 shows schematically the formation of an apparent magnified image of the printed raster in the inventive security element according to a first embodiment of the invention.

FIG. 5 is a photograph of magnified moving images obtained on the security element according to the first embodiment of the invention.

FIG. 6 shows schematically the alignment of rasters in the inventive security element formed with transparent phase Fresnel zone plates.

FIG. 7 shows a photograph of a microraster with transparent phase Fresnel zone plates.

FIG. 8 shows a photograph of magnified moving images obtained using the microraster shown in Figure 7.

FIG. 9 shows schematically the alignment of rasters in the inventive security element with reflective phase Fresnel zone plates.

## Best Embodiment of the Invention

According to the present invention, a security element is a multilayered structure of transparent polymeric films, preferably of PET, PP or PVC. Raster of microimages is applied by printing or embossing to the upper surface of one of the layers. Relief microraster structure in the form of focusing mirror elements (first embodiment) or phase Fresnel zone plates (second embodiment) is provided on the opposite surface of the layer. The security element can further comprise additional layers and coatings to protect it from external effects or copying and to enhance the characteristics of the produced images.

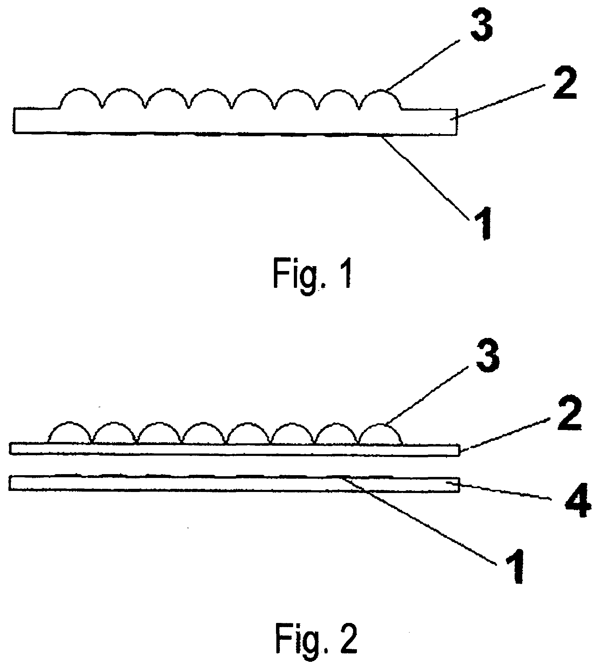

For comparison, consider a conventional Motion™ security element (FIG. 1), wherein one side of a transparent polymeric film 2 has a printed or embossed raster 1 of microimages, and the other side of the film has a raster 3 of spherical micro lenses. A conventional MOVE™ security element (FIG. 2) is similar, but the printed raster is disposed on a polymeric or paper carrier 4, and a polymeric film 2 with a microlens raster 3 is applied on the side of the printed raster.

To facilitate understanding of the present invention, exemplary embodiments of inventive security elements will be described below.

## Example 1

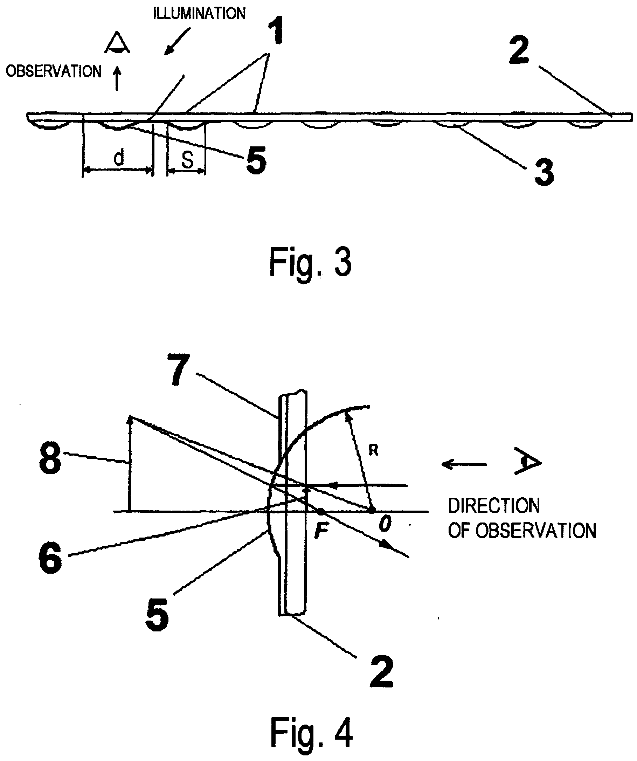

Raster 1 of microimages in the form of symbols with a specific size equal to the half-cycle of the raster grid, for example, 30-50 $\mu$m, is applied by printing or embossing to the upper surface of a transparent polymeric film 2 (FIG. 3). Elementary images of symbols, located in points of the raster grid, are formed by 1 - 10 $\mu$m thin lines in the shape of symbols, for example, letters "OK", located in points of the raster grid. Transparent polymeric (varnished) layer is applied to the opposite surface of the film 2; the layer comprises embossed convex spherical micro-bumps 3 having a diameter of 60-100 $\mu$m and covered with thin metal layers 5 with a high reflection ratio (for example, aluminum or silver) which are applied by a vacuum deposition. As a result a micromirror raster structure is formed. Arrangement and orientation of the micromirror raster are selected so that they match the arrangement and orientation of the microimage raster formed on the upper surface of the polymeric film and give rise to the effect of magnified moving images (moiré magnification effect) when the upper surface of the polymeric film is viewed in reflected light. The size and arrangement of the generated apparent magnified images of symbols that are located in points of the microimage raster are determined by the radius of curvature of the micromirrors and the distance thereof from the surface, in which the raster of microimages is formed, i.e. the thickness of the polymeric film.

Figure 4 shows schematically the formation of an apparent (virtual) image by one of the micromirrors. The upper surface of the polymeric film 2 comprises micro-symbols 6 of a printed raster, while the lower surface of the polymeric film comprises a varnished layer 7, in which micromirrors having a mirror surface 5 with radius of curvature R and focal length F are made. The size of the apparent (virtual) image 8 and its position relative to the surface of the film are determined by the position of the micro-symbol relative to the micromirror focus, which is at a distance of half the radius R of the spherical surface of the micromirror. Radius of the micromirrors is specified when micro-bumps are embossed in the transparent varnished layer. It can be easily seen that the inventive structures of micromirrors allow the formation of thinner security elements than the Motion security elements, having the thickness equal to the sum of thicknesses of the lens and film. In the inventive micromirror raster the thickness (height) of the micro-lenses can be 5-7 $\mu$m. In addition, the required magnification of apparent image of symbols is achieved with greater radii of curvature of the mirrors than radii of lenses in the Motion security elements, this facilitating the formation of micromirror raster. Another important advantage of the micromirror rasters is that they can be also formed inside multilayered structures, not only on the surface of polymeric films. In this example, the varnished micromirror surface may be protected by a transparent polymeric film through its duplication (lamination), or by applying an additional protective layer. This will not impair the security effect - the apparent magnified image is formed in the same way as without the protective layer, which is important for extending the service live and improving the reliability of the security elements.

Example 2

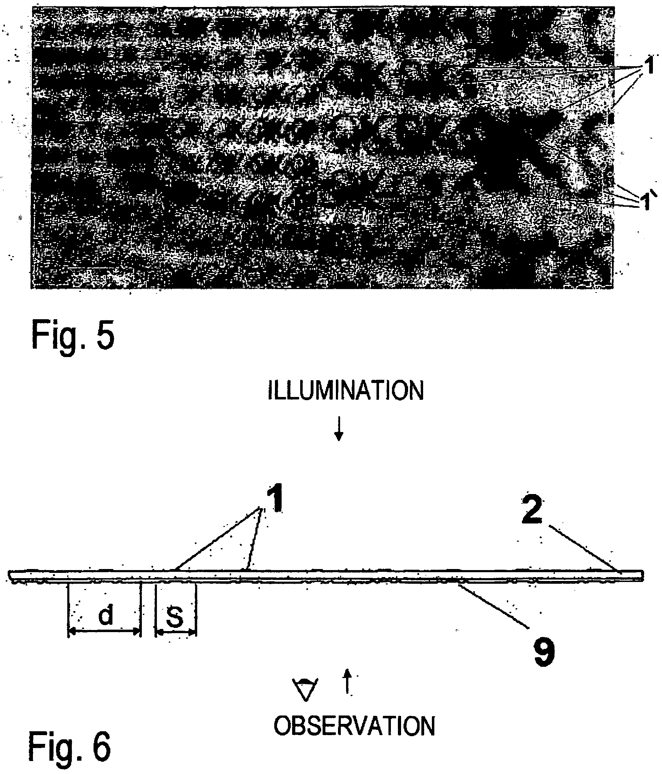

Micromirror raster can be applied directly to the surface of a polymeric film having a micro-symbol raster applied thereon by applying 5-10 $\mu$m varnished layer and embossing therein micro-bumps of 60-100 $\mu$m in diameter and 5-7 $\mu$m in height with a radius of curvature of 50-100 $\mu$m, followed by deposition of reflective metal layers (Al, Ag, Cu, Ni, etc.) on them. As a result, apparent magnified moving images of symbols can be formed in front of the film plane, rather than behind it as in Example 1. Location of the apparent image will also be determined by the radius of curvature of the micromirrors and the thickness of the varnished layer. In this embodiment, the micromirror raster layer can be also easily protected by duplication or application of protecting layers. FIG. 5 shows magnified moving images of printed (embossed) micro-symbols "OK" and shadows of the micro-symbols in a security element made by the same method.

Example 3

In a second embodiment of the invention the elements of a relief microraster structure are formed of transparent phase Fresnel zone plates. Such structures can be formed of thinner films than the relief structures formed by Motion™, Move™ and HALS methods.

FIG. 6 shows a security element comprising a raster structure of flat phase Fresnel zone plates 9, formed on the surface of a transparent polymeric film 2 by embossing in a pre-applied 3-5 $\mu$m thick polymeric varnished layer, with the depth of the microrelief of 1 - 0.5 $\mu$m. Such relief phase elements are known to be similar to micro-lenses with a focal length determined by the radii and depth of embossing of the micro elements.

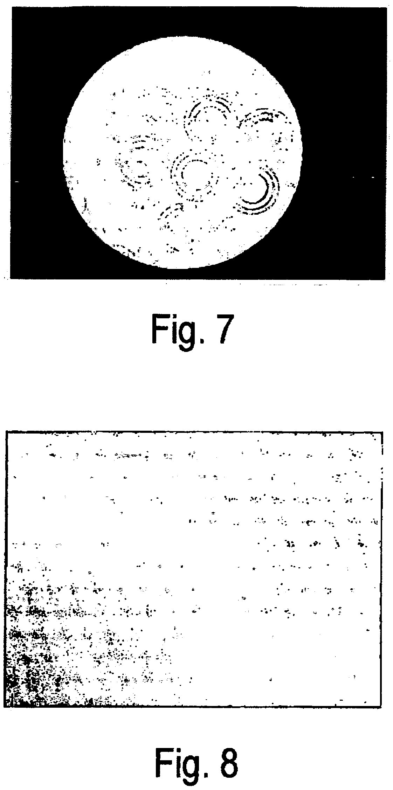

FIG. 7 shows a photograph of a microrelief formed of flat phase Fresnel zone plates. Concentric ring-shaped embossed structures are located in points of the microraster. Diameters of the rings are calculated by the formula:

$$ R_m = \sqrt{Fm\lambda} \ , $$

where

F is the equivalent focal length of the zone phase element;
m are odd numbers 1, 3, 5, 7, ...;
$\lambda$ is the wavelength of light, in which the element is viewed (here the average value of $\lambda$ = 0.5 $\mu$m has

been selected);
$R_m$ is the outer radius m of the ring.

The difference in the thickness of the polymeric layer (varnish) in adjacent rings should differentiate the optical paths of light passing through them by value $\lambda$ (the phase advance difference of $\pi$), which in this embodiment provided the embossing depth of 0.8-0.9 $\mu$m at the refractive index n of varnish of about 1.6.

The estimates have shown that for the equivalent focal length F of 20 $\mu$m the required radii of rings are: $R_1$ = 3.16 $\mu$m, $R_3$ = 5.48 $\mu$m, $R_5$ = 7.07 $\mu$m, $R_7$ = 8.36 $\mu$m.

For the focal length of 100 $\mu$m the required radii of rings are: $R_1$ = 7.07 $\mu$m, $R_3$ = 12.25 $\mu$m, $R_5$ = 15.81 $\mu$m, $R_7$ = 20.37 $\mu$m.

For the focal length of 1000 $\mu$m (1 mm) the required radii of rings are: $R_1$ = 22.33 $\mu$m, $R_3$ = 38.73 $\mu$m, $R_5$ = 50.00 $\mu$m, $R_7$ = 59.16 $\mu$m.

Therefore, to obtain the effect of magnified moving symbols in 20 $\mu$m-thick security threads similarly to the "Motion" method, precision embossing on varnished layers will be required with the line thickness resolution greater than 1 $\mu$m and the embossing depth better than 0.1 $\mu$m. Embossing of such structures requires dedicated advanced equipment and methods for nano-printing in thin polymeric materials.

In a case of the equivalent focal length of 1000 $\mu$m the requirements to the equipment and method for producing rasters of phase zone elements are much lower. Such structures can be used to produce moiré magnification security effects in plastic cards, where the polymeric layer thickness may reach 100 and 1000 $\mu$m. Fig. 6 shows a photograph of just such raster microstructure with focal length F of about 1200 $\mu$m. Linear dimensions of Fresnel rings are 40, 60 and 70 $\mu$m, the embossing depth is 0.5-0.7 mm.

FIG. 8 shows a photograph taken with this raster structure of magnified moving images in the form of dots having a size of 1-2 mm (depending on the orientation of micro-rasters). Size of the dots in the printed micro-raster was 80 $\mu$m.

Example 4

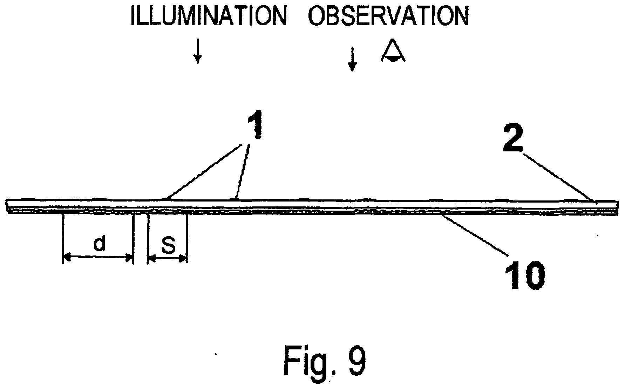

Raster of phase Fresnel zone plates may also be configured as reflective microelements 10 (FIG. 9); furthermore, it may also be located not only on the surface of the polymeric structure, but inside it, which is often necessary to protect against copying, improve durability and protect against external effects. Such structures can be made by the methods of manufacturing the security elements described in Example 3, complemented with operations for dusting the relief structure with reflective films, e.g. by metalizing.

## INDUSTRIAL APPLICABILITY

The invention offers improved document security owing to a new visual dynamic effect, enhances the quality of visual dynamic effect and extends the life of the security document.

## Claims

1. A multi-layered polymeric security element with optically variable effect, configured as a structure comprising a transparent polymeric film (2), a one layer (7) that comprises a relief microraster structure (3,5) and a second layer that comprises a raster (1) of microimages in the form of symbols (6), wherein the spatial period of the raster(1) is determined by the spatial period of the relief microraster structure, **characterized in that** elements of the relief microraster structure are spherical focusing mirror elements disposed on a lower surface of the polymeric film (2) inside the structure of the security element; the arrangement and orientation of the spherical focusing mirror elements as well as their radii of curvature R and focal lengths F are selected so that they match the arrangement and orientation of the raster (1)of microimages formed on the upper surface of the polymeric film (2) so that magnified moving images of the symbols of elements of the raster and magnified moving images of shadows of the elements of the raster can be observed when viewing the security element.

2. A multi-layered polymeric security element according to claim 1, wherein the spherical focusing mirror elements are micro-bumps with radius of curvature R of 50-100 $\mu$m embossed in a varnished layer with thickness of 5-10 $\mu$m, to which a thin reflective or semi-transparent reflective layer of metal is applied.

3. A multi-layered polymeric security element according to claims 1 to 2, further comprising a transparent protecting coating applied over the relief microraster structure.

4. A multi-layered polymeric security element according to claims 1 to 2, wherein convex spherical micro-bumps (3) of 60-100 $\mu$m in diameter are formed by embossing and coated by vacuum deposition with thin reflective or semi-transparent reflective layers of metal.

5. A multi-layered polymeric security element according to claim 4, wherein the metal layer is made of aluminum or silver.

## Patentansprüche

1. Mehrschichtiges polymeres Sicherheitselement mit optisch variablem Effekt, konfiguriert als eine Struktur umfassend transparente polymere Folie (2), eine Schicht (7), die eine Reliefmikrorasterstruktur (3, 5) umfasst, und eine zweite Schicht, die ein Raster (1) von Mikrobildern in der Form von Symbolen (6) umfasst, wobei der räumliche Abschnitt des Rasters (1) durch den räumlichen Abschnitt der Reliefmikrorasterstruktur bestimmt ist, **dadurch gekennzeichnet, dass** Elemente der Reliefmikrorasterstruktur kugelförmige fokussierende Spiegelelemente sind, die auf einer unteren Fläche der polymere Folie (2) innerhalb der Struktur des Sicherheitselements angeordnet sind; die Anordnung und Ausrichtung der kugelförmigen fokussierenden Spiegelelemente ebenso wie deren Krümmungsradien R und Brennweiten F so ausgewählt sind, dass sie mit der Anordnung und Ausrichtung des Rasters (1) an Mikrobildern, gebildet auf der oberen Fläche der polymeren Folie (2), zusammenpassen, so dass vergrößerte, sich bewegende Bilder der Symbole der Elemente des Rasters und vergrößerte, sich bewegende Bilder von Schatten der Elemente des Rasters beobachtet werden können, wenn das Sicherheitselement betrachtet wird.

2. Mehrschichtiges polymeres Sicherheitselement nach Anspruch 1, wobei die kugelförmigen fokussierenden Spiegelelemente Mikro-Erhebungen mit Krümmungsradius R von 50-100 $\mu$m, geprägt in einer lackierten Schicht mit einer Dicke von 5-10 $\mu$m, sind, auf die eine dünne reflektierende oder halbtransparente reflektierende Schicht aus Metall aufgetragen ist.

3. Mehrschichtiges polymeres Sicherheitselement nach Ansprüchen 1 bis 2, weiter umfassend eine transparente Schutzbeschichtung, die über der Reliefmikrorasterstruktur aufgetragen ist.

4. Mehrschichtiges polymeres Sicherheitselement nach Ansprüchen 1 bis 2, wobei konvexe kugelförmige Mikro-Erhebungen (3) mit einem Durchmesser von 60-100 $\mu$m durch Prägen gebildet sind und beschichtet sind durch Vakuumabscheidung mit dünnen reflektierenden oder halb-transparenten reflektierenden Schichten aus Metall.

5. Mehrschichtiges polymeres Sicherheitselement nach Anspruch 4, wobei die Metallschicht aus Aluminium oder Silber hergestellt ist.

## Revendications

1. Un élément de protection multicouche polymère ayant un effet optique variable, configuré en une structure comprenant un film polymère transparent (2), au moins une couche (7) qui comprend une structure en relief micro-trame (3, 5) et une seconde couche qui comprend une trame (1) de micro-images sous la forme de symboles (6), dans lequel la période spatiale de la trame (1) est déterminée par la période spatiale de la structure en relief micro-trame, **caractérisé en ce que** les éléments de la structure en relief micro-trame sont des éléments de focalisation sphériques de type miroir disposés sur une surface inférieure du film polymère (2) à l'intérieur de la structure de l'élément de protection ; l'agencement et l'orientation des éléments de focalisation sphériques de type miroir ainsi que leurs rayons de courbure R et leurs longueurs focales F sont sélectionnés de façon à correspondre à l'agencement et l'orientation de la trame (1) de micro-images formée sur la surface supérieure du film polymère (2) de sorte que des images animées agrandies des symboles des éléments de la trame et des images animées agrandies des ombres des éléments de la trame peuvent être observées lors de la visualisation de l'élément de protection.

2. Un élément de protection multicouche polymère selon la revendication 1, dans lequel les éléments de focalisation sphériques de type miroir sont des micro-nervures ayant un rayon de courbure R compris entre 50 et 100 $\mu$m, gravées en relief dans une couche vernie ayant une épaisseur comprise entre 5 et 10 $\mu$m, où est appliquée une fine couche de métal réfléchissante ou réfléchissante semi-transparente.

3. Un élément de protection multicouche polymère selon l'une des revendications 1 à 2, comprenant en outre un revêtement protecteur transparent appliqué sur la structure en relief micro-trame.

4. Un élément de protection multicouche polymère selon l'une des revendications 1 à 2, dans lequel des micro-nervures sphériques convexes (3) ayant un diamètre compris entre 60 et 100 $\mu$m sont formées par gravure en relief et revêtues par déposition sous vide de fines couches de métal réfléchissantes ou réfléchissantes semi-transparentes.

5. Un élément de protection multicouche polymère selon la revendication 4, dans lequel la couche de métal est en aluminium ou en argent.

EP 2 684 703 B1

Fig. 1

Fig. 2

7

EP 2 684 703 B1

ILLUMINATION

OBSERVATION

**1**

**2**

d

S

**5**

**3**

## Fig. 3

**7**

**8**

R

**6**

**F**

**0**

DIRECTION
OF OBSERVATION

**5**

**2**

## Fig. 4

8

## Fig. 5

ILLUMINATION

↓

## Fig. 6

OBSERVATION

Fig. 7

Fig. 8

ILLUMINATION  OBSERVATION

↓            ↓  △

Fig. 9

## REFERENCES CITED IN THE DESCRIPTION

**Patent documents cited in the description**

- WO 2007133613 A2
- EP 2132340 A1
- RU 2395842 C2